# EUROPÄISCHE PATENTSCHRIFT

(11) **EP 3 412 490 B1**
(45) Veröffentlichungstag und Bekanntmachung des Hinweises auf die Patenterteilung: **19.08.2020**
(21) Anmeldenummer: 18176387.1
(22) Anmeldetag: 07.06.2018
(51) Int. Cl.: B60K 37/06

(54) **BEDIENVORRICHTUNG ZUM BEDIENEN ZUMINDEST EINES GERÄTS IN EINEM KRAFTFAHRZEUG, MIT EINEM BEDIENELEMENT UND MIT EINER SCHALTEINRICHTUNG MIT EINEM SCHIEBEELEMENT, KRAFTFAHRZEUG SOWIE VERFAHREN**
OPERATING DEVICE FOR OPERATING OF AT LEAST ONE DEVICE IN A MOTOR VEHICLE, WITH AN OPERATING ELEMENT AND WITH A SWITCH DEVICE WITH A SLIDING ELEMENT, MOTOR VEHICLE AND METHOD
DISPOSITIF DE COMMANDE PERMETTANT DE COMMANDER AU MOINS UN APPAREIL DANS UN VÉHICULE AUTOMOBILE, DOTÉ D'UN ÉLÉMENT DE COMMANDE ET D'UN DISPOSITIF DE COMMUTATION POURVU D'UN ÉLÉMENT COULISSANT, VÉHICULE AUTOMOBILE AINSI QUE PROCÉDÉ

(30) Priorität: 09.06.2017 DE 102017112723
(43) Veröffentlichungstag der Anmeldung: 12.12.2018
(73) Patentinhaber: Valeo Schalter und Sensoren GmbH, 74321 Bietigheim-Bissingen (DE)
(72) Erfinder: Mozer, Reiner, 74321 Bietigheim-Bissingen (DE)
(74) Vertreter: Pothmann, Karsten

(56) Entgegenhaltungen:
- EP-A2- 1 471 551
- DE-A1-102014 208 025
- JP-A- 2015 015 122

## Beschreibung

Die Erfindung betrifft eine Bedienvorrichtung zum Bedienen zumindest eines Geräts in einem Kraftfahrzeug. Die Bedienvorrichtung weist ein Bedienelement und eine Leiterplatte mit einer ersten Seite auf, auf welcher zumindest ein Schalteinrichtungsteil einer Schalteinrichtung der Bedienvorrichtung angeordnet ist, wobei bei einem Betätigen des Bedienelements die Schalteinrichtung schaltbar ist. Ferner betrifft die Erfindung ein Kraftfahrzeug sowie ein Verfahren.

Das Interesse richtet sich vorliegend insbesondere auf Bedienvorrichtungen für Kraftfahrzeuge. Derartige Bedienvorrichtungen sind in unterschiedlichen Ausführungsformen aus dem Stand der Technik bekannt. Solche Bedienvorrichtungen umfassen üblicherweise ein Bedienelement, welches zum Durchführen einer Bedienhandlung betätigbar ist. Die Betätigung kann dabei beispielsweise mit zumindest einem Finger oder einem entsprechenden Eingabegerät erfolgen. Die Bedieneingabe kann mit einer entsprechenden Schalteinrichtung erfasst werden. Infolge der dadurch erfassten Bedienhandlung kann ein entsprechendes Steuersignal ausgegeben werden, mit dem eine der Bedienvorrichtung zugeordnete Funktionseinrichtung des Kraftfahrzeugs, insbesondere eines elektrischen Geräts des Kraftfahrzeugs, angesteuert werden kann. Eine solche Funktionseinrichtung kann beispielsweise ein Informations- und Unterhaltungssystem, ein Navigationssystem, eine Klimaanlage oder dergleichen sein.

Insbesondere aus dem Kraftfahrzeugbau sind dabei Bedienelemente bekannt, welche beispielsweise an einer Lenkhandhabe oder an einer Mittelkonsole verbaut sind. Insbesondere ist hierbei für jedes elektrische Gerät beziehungsweise für jede Funktion eines elektrischen Geräts eine separate Taste, Wippe oder Walze verbaut. Dies sorgt dafür, dass insbesondere bei immer mehr komplexeren Kraftfahrzeugen mit mehr elektrischen Geräten beziehungsweise Funktionen mehr separate Tasten, Wippen oder Walzen zur Verfügung gestellt werden müssen. Dies kann unübersichtlich werden und insbesondere auch bei sicherheitsrelevanten Funktionen zu unerwünschter Fehlbedienung führen.

Die DE 10 2014 208 025 A1 offenbart eine Vorrichtung zur Einstellung eines Betriebsparameters einer elektrischen Einrichtung, insbesondere zur Einstellung der Temperatur einer Heizungs- oder Klimaanlage eines Fahrzeugs. Die Vorrichtung ist versehen mit einer linear verschiebbaren Verstelleinheit zur Verstellung des Betriebsparameters und einem Linearführungselement, an dem die längs eines Verschiebewegs verschiebbare Verstelleinheit geführt ist. Ferner weist die Vorrichtung eine mit Abstand unterhalb des Linearführungselements angeordnete Trägerplatte mit einer dem Linearführungselement zugewandten Oberseite und einer dem Linearführungselement, abgewandten Unterseite auf. Das Linearführungselement weist eine der Trägerplatte abgewandte Oberseite mit hinterleuchtbaren Symbolfeldern auf, die in Erstreckung des Verschiebeweges der Verstelleinheit nebeneinander angeordnet sind und längs derer sich oder über die sich die Verstelleinheit bei dessen Verschiebung bewegt. Ferner ist eine Hinterleuchtungseinheit mit mehreren Hinterleuchtungslichtquellen vorgesehen, die auf der Oberseite der Trägerplatte sowie unterhalb des Linearführungselements angeordnet sind und deren Licht von der Trägerplatte aus von unten zu den Symbolfeldern an der Oberseite des Linearführungselements zum Hinterleuchten der Symbolfelder gelangt.

Die EP 1 471 551 A2 offenbart einem Hebelschalter mit einen von einer Person manuell zu betätigenden Betätigungshebel, ein Stützelement zum schwenkbaren Abstützen des Betätigungshebels, eine elektromagnetische Bremse, die gegenüber einem Basisende des Betätigungshebels angeordnet ist, einen optischen Bildsensor zum Erfassen des Betriebszustand des Betätigungshebels und Steuermittel zum Steuern des Antriebs der elektromagnetischen Bremse auf der Grundlage eines Ausgangssignals vom optischen Bildsensor, wobei der Bewegungsbereich des Betätigungshebels durch die elektromagnetische Bremse definiert ist. Eine vorbestimmte taktile Antwort, die dem Betriebszustand entspricht, wird an den Betätigungshebel gegeben. Der Schalter hat einen Aktuator, der gegenüber einem Basisende eines Betätigungshebels angeordnet ist. Ein optischer Bildsensor erfasst einen Betriebszustand des Hebels. Eine Steuereinheit steuert den Antrieb des Aktuators auf der Grundlage eines Ausgangssignals vom optischen Bildsensor. Ein Bewegungsbereich des Hebels wird durch den Aktuator definiert, und eine vorbestimmte taktile Reaktion, die dem Betriebszustand entspricht, wird dem Hebel gegeben.

Die JP 2015015122 offenbart eine Bedienhebelvorrichtung, mit der die Betriebssicherheit mit einer minimalen Anzahl von Komponenten verbessert werden kann. Ein rotierendes kugelförmiges Teil und eine Tragwelle sind an einem tragenden beweglichen Element ausgebildet, das mit einem Betätigungshebel gekoppelt ist, und der Betätigungshebel ist in zwei Richtungen drehbar gelagert. Ein bewegliches Kupplungselement ist an dem beweglichen Stützelement befestigt, und ein Erfassungsschieber wird durch einen Antriebsvorsprung des beweglichen Kupplungselements in einer X1-X2-Richtung und in einer β-Richtung bewegt. Am Erfassungsschieber sind bewegliche Kontakte angebracht. Jeder bewegliche Kontakt gleitet an einem gemeinsamen festen Kontakt und einem festen Schaltkontakt, die auf einem Erfassungssubstrat ausgebildet sind, um zu erfassen, in welche Richtung der Betätigungshebel geneigt ist.

Es ist Aufgabe der vorliegenden Erfindung eine Bedienvorrichtung, ein Kraftfahrzeug und ein Verfahren zu schaffen, mittels welcher beziehungsweise mittels welchem eine möglichst komfortable und sichere Bedienung ermöglicht ist.

Diese Aufgabe wird durch eine Bedienvorrichtung, ein Kraftfahrzeug sowie durch ein Verfahren mit den Merkmalen gemäß den jeweiligen unabhängigen Ansprüchen gelöst.

Ein Aspekt der Erfindung betrifft eine Bedienvorrichtung zum Bedienen zumindest eines Geräts in einem Kraftfahrzeug. Die Bedienvorrichtung weist ein Bedienelement und eine Leiterplatte mit einer ersten Seite auf. Auf der ersten Seite der Leiterplatte ist zumindest ein Schalteinrichtungsteil einer Schalteinrichtung der Bedienvorrichtung angeordnet, wobei bei einem Betätigen des Bedienelements die Schalteinrichtung schaltbar ist.

Das Schalteinrichtungsteil ist auf einer einem Betätigungsteil des Bedienelements abgewandten ersten Seite der Leiterplatte angeordnet. Die Schalteinrichtung weist ein Schiebeelement auf, welches auf der dem Betätigungsteil abgewandten ersten Seite der Leiterplatte mit dem Bedienelement gekoppelt ist. Das Schiebeelement ist abhängig von der Betätigung des Bedienelements relativ zum Schalteinrichtungsteil linear verschiebbar. Abhängig von einer derartigen Verschiebung und einer Zusammenwirkung von Schalteinrichtungsteil und dem Schiebeelement ist die Schalteinrichtung schaltbar. Insbesondere ist es dadurch ermöglicht, dass das Schiebeelement und das Schalteinrichtungsteil reibungsreduziert miteinander zusammenwirken können. Dadurch ist ein minimaler mechanischer Verschleiß ermöglicht, da nur geringe Reibungskräfte zwischen dem Schiebeelement und dem Schalteinrichtungsteil zu verzeichnen sind. Dadurch kann die Lebensdauer der Bedienvorrichtung erhöht und die Ausfallwahrscheinlichkeit der Bedienvorrichtung reduziert werden. Insbesondere kann dadurch die Bedienvorrichtung für Steuerstromanwendungen, insbesondere in Steuereinrichtungen, eingesetzt werden, da die Zuverlässigkeit der Bedienvorrichtung erhöht ist. Insbesondere aufgrund der hohen Zuverlässigkeit der Bedienvorrichtung kann diese auch für sicherheitskritische Anwendungen eingesetzt werden. Dadurch ist eine komfortable und sichere Bedienung der Bedienvorrichtung ermöglicht. Des Weiteren kann durch die reibungsreduzierte Ausgestaltungsform insbesondere eine Gewichtsreduzierung sowie eine Bauraumeinsparung insbesondere hinsichtlich der Bautiefe der Bedienvorrichtung ermöglicht werden.

Das Bedienelement ist insbesondere ein Wippschalter oder ein Kippschalter.

Die Bedienvorrichtung kann in einem Kraftfahrzeug eingesetzt werden. Die Bedienvorrichtung kann in einem Innenraum des Kraftfahrzeugs, beispielsweise in der Mittelkonsole oder an dem Armaturenbrett, insbesondere an einer Lenkhandhabe, angeordnet sein. Die Bedienvorrichtung umfasst das Bedienelement, welches beispielsweise von dem Fahrer des Kraftfahrzeugs oder einem weiteren Insassen des Kraftfahrzeugs bedient werden kann. Zum Durchführen der Bedienhandlung, bei der das Bedienelement bedient wird, kann der Fahrzeuginsasse beispielsweise mit zumindest einem Finger oder einem entsprechenden Eingabegerät auf das Bedienelement eine Kraft ausüben. In Abhängigkeit dieser Bedienhandlung kann dann ein entsprechendes Steuersignal ausgegeben werden und das zumindest eine Gerät beziehungsweise eine Funktion des Geräts beziehungsweise mehrere Geräte können entsprechend angesteuert werden.

Insbesondere ist vorgesehen, dass sich die Kraft, welche der Bediener auf das Bedienelement ausübt auf das zum Schalteinrichtungsteil separate Schiebeelement überträgt. Dadurch wird eine lineare Bewegung des Schiebeelements initiiert. Somit findet über die Kraftausübung des Bedienelements eine Kraftübertragung an das Schiebeelement statt. Über das Bedienelement kann ebenfalls eine haptische Rückmeldung an den Bediener übertragbar sein, sodass dem Bediener nach dem Verschieben des Schiebeelements, insbesondere nach einem Schalten der Schalteinrichtung, eine haptische Rückmeldung zurückgegeben werden kann. Insbesondere ist somit bei dieser Ausgestaltungsform auf der zweiten Seite der Leiterplatte Bauraum geschaffen. In diesem Bauraum können insbesondere weitere Elemente angeordnet werden, welche beispielsweise einer weiteren Steuerung beziehungsweise Verbesserung der Bedienvorrichtung dienen können. Auf diese Weise ist eine komfortable Bedienung der Bedienvorrichtung ermöglicht.

Gemäß einer vorteilhaften Ausgestaltungsform kann die Schalteinrichtung zumindest zwei separate Schalteinrichtungsteile aufweisen, welche benachbart auf der ersten Seite der Leiterplatte angeordnet sind. Insbesondere kann vorgesehen sein, dass die Schalteinrichtung zumindest drei separate Schalteinrichtungsteile aufweist, welche benachbart auf der ersten Seite der Leiterplatte angeordnet sind. Insbesondere ist es dadurch ermöglicht, dass mittels der einen Bedienvorrichtung eine Mehrzahl an Geräten beziehungsweise Funktionen eines Geräts bedient werden können. Insbesondere kann vorgesehen sein, dass das Schiebeelement mit einem jeweiligen separaten Schalteinrichtungsteil wechselwirkt und dadurch ein jeweiliges Gerät schaltbar ist. Dadurch kann mittels einer Bedienvorrichtung hochfunktionell eine Mehrzahl an Geräten beziehungsweise eine Mehrzahl von Funktionen eines Geräts des Kraftfahrzeugs bedient werden. Insbesondere kann dadurch eine Gewichtsreduzierung beziehungsweise Bauraumreduzierung im Kraftfahrzeug realisiert werden, da weniger Bedienvorrichtungen im Kraftfahrzeug verbaut werden müssen.

Erfindungsgemäß erstreckt sich das Bedienelement beidseits der Leiterplatte, insbesondere durch ein Loch in der Leiterplatte, und insbesondere ist das Loch als ein Langloch ausgebildet. Insbesondere kann durch das Loch, welches insbesondere als Langloch ausgebildet ist eine Führung für das Bedienelement geschaffen werden, sodass das Bedienen der Bedienvorrichtung noch sicherer durchgeführt werden kann. Des Weiteren kann dadurch auf einfache Weise die Kraftübertragung von dem Bedienelement auf das Schiebeelement durch die Leiterplatte realisiert werden. Insbesondere ist dadurch eine zuverlässige Bedienung der Bedienvorrichtung realisiert.

Erfindungsgemäß ist das Loch mit einer elastischen Abdeckung abgedeckt, wobei sich das Bedienelement passgenau durch ein weiteres Loch in der elastischen Abdeckung erstreckt. Insbesondere kann die elastische Abdeckung mit der Leiterplatte dicht verbunden sein, sodass die Schalteinrichtung vor Umwelteinflüssen, wie beispielsweise Staub und/oder Wasser, geschützt ist. Insbesondere kann dadurch, insbesondere bezüglich der Schalteinrichtung, eine hohe Schutzklasse bezüglich der Dichtigkeit, beispielsweise IP Schutzklasse 69, erreicht werden. Insbesondere sind dadurch eine Reduzierung der Ausfallwahrscheinlichkeit sowie eine Erhöhung der Lebensdauer ermöglicht, sodass die Bedienvorrichtung sicherer betrieben werden kann.

In einer vorteilhaften Ausgestaltungsform kann das Schiebeelement zumindest eine Kontaktfeder aufweisen, welche abhängig von der Verschiebung zum direkten Berühren des Schalteinrichtungsteils angeordnet ist. Insbesondere kann die zumindest eine Kontaktfeder zwischen dem Schiebeelement und dem Schalteinrichtungsteil angeordnet sein. Insbesondere kann bei einem Verschieben des Schiebeelements, insbesondere parallel zur Leiterplatte, die Kontaktfeder mit verschoben werden und einen elektrischen Kontakt zwischen der Kontaktfeder und dem Schalteinrichtungsteil durchführen. Insbesondere kann durch den elektrischen Kontakt dann die Schalteinrichtung geschaltet werden. Insbesondere kann die Kontaktfeder aus zwei Kontaktfederelementen ausgebildet sein, sodass eine redundante Kontaktierung der Kontaktfeder und des Schalteinrichtungsteils realisiert ist. Insbesondere kann vorgesehen sein, sollte die Schalteinrichtung über eine Mehrzahl von Schalteinrichtungsteilen verfügen, eine gleiche Anzahl an Kontaktfedern, wie Schalteinrichtungsteile, auf dem Schiebeelement angeordnet ist. Insbesondere kann dann eine jeweilige Kontaktfeder ein jeweiliges Schalteinrichtungsteil bei einem jeweiligen betätigtem Zustand kontaktieren und ein jeweiligen elektrischen Stromkreis schließen. Somit kann auf einfache Art und Weise der elektrische Stromkreis geschlossen werden, sodass ein zuverlässiges und einfaches Schalten der Schalteinrichtung realisiert ist.

Gemäß einer weiteren vorteilhaften Ausgestaltungsform können das Schalteinrichtungsteil und das Schiebeelement berührungslos miteinander zusammenwirken. Insbesondere sind das Schalteinrichtungsteil und das Schiebeelement galvanisch voneinander getrennt. Insbesondere können beispielsweise das Schalteinrichtungsteil und das Schiebeelement kapazitiv oder induktiv miteinander zusammenwirken. Insbesondere kann vorgesehen sein, dass das Schalteinrichtungsteil als Detektor fungiert und insbesondere die Zusammenwirkung mit dem Schiebeelement detektiert. Insbesondere ist dadurch eine kontaktlose Schaltung der Schalteinrichtung realisiert. Dadurch ist ein mechanischer Verschleiß reduziert, da keine Reibungskräfte innerhalb der Schalteinrichtung gegeben sind. Dadurch kann die Erhöhung der Lebensdauer der Bedienvorrichtung und eine Reduzierung der Ausfallwahrscheinlichkeit realisiert werden.

Ebenfalls vorteilhaft ist, wenn das Schalteinrichtungsteil als Magnet-Sensorelement ausgebildet ist. Beispielweise kann das Schalteinrichtungsteil als Hall-Sensorelement ausgebildet sein. Insbesondere ist es dadurch ermöglicht, dass beispielsweise durch das Aufbringen eines Magneten auf das Schiebeelement eine Magnetfeldveränderung bei der linearen Verschiebung des Schiebeelements durch das Magnetelement, insbesondere das Hall-Sensorelement, erfasst werden kann. Dadurch lässt sich sehr einfach und zuverlässig die Verschiebung des Schiebeelements relativ zum Schalteinrichtungsteil, insbesondere reibungslos, erfassen, sodass die Schalteinrichtung dann bei erfasster Verschiebung sicherer schalten kann.

Es hat sich weiterhin als vorteilhaft erwiesen, wenn die Bedienvorrichtung eine optische Anzeigeeinheit aufweist, die abhängig von dem Schalten der Schalteinrichtung aktivierbar ist und welche auf einer dem Betätigungsteil zugewandten zweiten Seite der Leiterplatte angeordnet ist. Insbesondere kann beispielsweise ein Status der Bedienvorrichtung an der optischen Anzeigeeinheit angezeigt werden. Insbesondere kann somit ein Bediener der Bedienvorrichtung über den Status der Bedienvorrichtung informiert werden. Beispielsweise kann die optische Anzeigeeinheit sich abhängig von dem Schalten farblich verändern beziehungsweise kann die Frequenz eines Aufleuchtens der optischen Anzeigeeinheit abhängig von dem Schalten der Schalteinrichtung veränderbar sein. Beispielsweise kann vorgesehen sein, dass eine nicht betätigte Bedienvorrichtung eine weiße optische Anzeigeeinheit aufweist, während eine betätigte Bedienvorrichtung eine grüne Anzeigeeinheit aufweist. Ebenfalls möglich ist, dass beispielsweise eine defekte Bedienvorrichtung beziehungsweise ein defektes Gerät des Kraftfahrzeugs mittels einer roten optischen Anzeigeeinheit angezeigt ist.

Ebenfalls vorteilhaft ist, wenn die optische Anzeigeeinheit zumindest einen Lichtleiter aufweist. Insbesondere kann mittels des Lichtleiters Licht übertragen werden. Insbesondere kann beispielsweise Licht an eine Bedienoberfläche der Bedienvorrichtung übertragen werden, sodass insbesondere der Status der Bedienvorrichtung an einer Bedienoberfläche der Bedienvorrichtung angezeigt werden kann. Durch den Lichtleiter ist es ermöglicht, dass ein Leuchtmittel der optischen Anzeigeeinheit nicht direkt beispielweise an der Bedienoberfläche sondern auch disloziert angeordnet sein kann. Ebenfalls möglich ist, dass beispielsweise das Leuchtmittel direkt auf der Leiterplatte angeordnet werden kann und das Licht des Leuchtmittels mittels des Lichtleiters an die Bedienoberfläche übertragen werden kann. Dadurch kann beispielsweise das Leuchtmittel mittels einer Oberflächenmontagetechnologie (Surface-Mount-Technology; SMT) einfach und schnell auf der Leiterplatte montiert werden. Insbesondere kann dadurch eine verbesserte Ausleuchtung mittels eines einfachen Lichtleiters durchgeführt werden.

In einer weiteren vorteilhaften Ausgestaltungsform kann auf der optischen Anzeigeeinheit ein das Gerät charakterisierendes optisches Symbol ausgebildet sein und das optische Symbol mittels eines Leuchtmittels, welches insbesondere auf einer dem Betätigungsteil zugewandten zweiten Seite der Leiterplatte angeordnet ist, beleuchtbar sein. Insbesondere durch die Anordnung der Schalteinrichtung auf der ersten Seite der Leiterplatte kann somit auf einer zweiten Seite der Leiterplatte das Leuchtmittel angeordnet sein. Das Leuchtmittel kann dann mittels beispielsweise des Lichtleiters das Licht verbessert auf die optische Anzeige und insbesondere auf das optische Symbol leuchten, sodass eine verbesserte Ausleuchtung des Symbols sowie eine bauraumreduzierte Bedienvorrichtung realisiert werden kann.

Es hat sich weiterhin als vorteilhaft erwiesen, wenn sich das Bedienelement auf einer dem Betätigungsteil zugewandten zweiten Seite der Leiterplatte durch ein Loch in einer zur Leiterplatte beabstandet angeordneten zumindest bereichsweise lichtdurchlässigen Matte der Bedienvorrichtung erstreckt. Insbesondere kann die lichtdurchlässige Matte an dem Bedienelement anliegen und insbesondere staub- und wasserdicht abschließen. Insbesondere können dadurch die Leiterplatte beziehungsweise die Bauelemente, welche sich auf der Leiterplatte befinden, vor Staub und/oder Wasser geschützt werden. Dadurch lässt sich eine hohe Dichtigkeit der Bedienvorrichtung realisieren, sodass beispielsweise eine IP 69 Schutzklasse realisiert werden kann. Insbesondere mittels der zumindest bereichsweise lichtdurchlässigen Matte kann die Matte mittels beispielsweise eines Leuchtmittels auf der Leiterplatte beleuchtet werden, sodass mittels der lichtdurchlässigen Matte eine optische Anzeigeeinheit bereitgestellt werden kann. Insbesondere kann somit eine verbesserte Ausleuchtung der Bedienvorrichtung sowie eine erhöhte Lebensdauer und eine reduzierte Ausfallwahrscheinlichkeit und damit eine sicherere Bedienung der Bedienvorrichtung realisiert werden.

Ebenfalls vorteilhaft ist, wenn die Matte als Silikonmatte ausgebildet ist. Insbesondere durch die Ausgestaltungsform als Silikonmatte lässt sich eine staub- und wasserfeste Matte bereitstellen, welche insbesondere ebenfalls elastisch und witterungsbeständig ist. Des Weiteren lässt sich Silikon sehr gut verarbeiten, sodass eine vereinfachte Herstellung der Bedienvorrichtung realisiert werden kann.

Es hat sich weiterhin als vorteilhaft erwiesen, wenn das Bedienelement ein Kippschalter oder ein Wippschalter ist. Insbesondere durch die Ausgestaltungsform als Kippschalter oder als Wippschalter lässt sich eine vorteilhafte lineare Verschiebung des Schiebeelements bei Kraftbeaufschlagung auf das Bedienelement realisieren. Da insbesondere im Kraftfahrzeug eine Mehrzahl von Kippschaltern und/oder von Wippschaltern verbaut ist, lässt sich somit die Bedienvorrichtung hochfunktionell innerhalb des Kraftahrzeugs verbauen.

Ein weiterer Aspekt der Erfindung betrifft ein Kraftfahrzeug mit einer Bedienvorrichtung gemäß der Erfindung. Das Kraftfahrzeug ist insbesondere als Personenkraftwagen ausgebildet.

Ein weiterer Aspekt der Erfindung betrifft ein Verfahren zum Bedienen einer Bedienvorrichtung zum Bedienen eines Geräts in einem Kraftfahrzeug. Die Bedienvorrichtung weist ein Bedienelement und eine Leiterplatte mit einer ersten Seite auf, auf welcher zumindest ein Schalteinrichtungsteil einer Schalteinrichtung der Bedienvorrichtung bereitgestellt wird. Bei einem Betätigen des Bedienelements wird die Schalteinrichtung geschaltet. Das Schalteinrichtungsteil wird auf einer einem Betätigungsteil des Bedienelements abgewandten Seite der Leiterplatte angeordnet und die Schalteinrichtung weist ein Schiebeelement auf. Das Schiebeelement wird auf der dem Betätigungsteil abgewandten Seite der Leiterplatte mit dem Bedienelement gekoppelt. Das Schiebeelement wird abhängig von der Betätigung des Bedienelements relativ zum Schalteinrichtungsteil linear verschoben, sodass abhängig von einer derartigen Verschiebung und einer Zusammenwirkung des Schalteinrichtungsteils mit dem Schiebeelement die Schalteinrichtung geschaltet wird.

Vorteilhafte Ausgestaltungsformen der Bedienvorrichtung sind als vorteilafte Ausgestaltungsformen des Kraftfahrzeugs sowie des Verfahrens anzusehen. Die Bedienvorrichtung sowie das Kraftfahrzeug weisen dazu gegenständliche Merkmale auf, welche eine Durchführung des Verfahrens ermöglichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Bedienvorrichtung aufweist;
- Fig. 2: eine schematische Seitenansicht einer Ausführungsform der Bedienvorrichtung;
- Fig. 3: eine schematische Draufsicht auf eine Ausführungsform einer Leiterplatte der Bedienvorrichtung gemäß Fig. 2;
- Fig. 4: eine schematische Seitenansicht eines weiteren Ausführungsbeispiels einer Bedienvorrichtung; und
- Fig. 5: eine schematische Draufsicht auf eine Ausführungsform einer Leiterplatte der Bedienvorrichtung gemäß Fig. 4.

In den Figuren werden gleiche und funktionsgleiche Elemente mit den gleichen Bezugszeichen versehen.

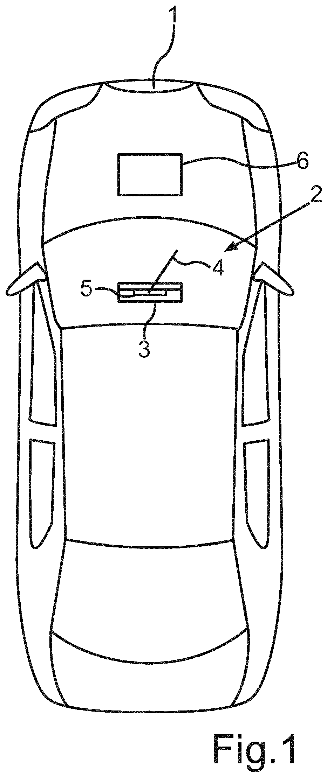

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst einen Innenraum 2, in welchem eine Bedienvorrichtung 3 angeordnet ist. Die Bedienvorrichtung 3, welche vorliegend schematisch dargestellt ist, umfasst zumindest ein Bedienelement 4, welches von einem Insassen des Kraftfahrzeugs 1 bedient werden kann. Die Bedienvorrichtung 3 kann derart in dem Innenraum 2 des Kraftfahrzeugs 1 angeordnet sein, dass das Bedienelement 4 dem Insassen des Kraftahrzeugs 1 zugewandt ist. Das Bedienelement 4 ist insbesondere ein Wippschalter oder ein Kippschalter.

Mit der Bedienvorrichtung 3 kann eine Bedienhandlung in Form der Betätigung des Bedienelements 4 erfasst werden. Insbesondere weist die Bedienvorrichtung 3 dazu eine Schalteinrichtung 5 auf, wobei bei einem Betätigen des Bedienelements 4 die Schalteinrichtung 5 schaltbar ist. Falls mittels der Schalteinrichtung 5 eine Bedienhandlung beziehungsweise die Betätigung des Bedienelements 4 erkannt wird, kann ein entsprechendes Steuersignal ausgegeben werden.

Insbesondere kann vorgesehen sein, dass mittels der Bedienvorrichtung 3 zumindest ein Gerät 6 des Kraftfahrzeugs 1 bedient werden kann. Es kann dabei vorgesehen sein, dass mit der Bedienvorrichtung 3 mehrere Funktionen des Geräts 6 bedient werden können beziehungsweise dass mehrere Geräte 6 mit der Bedienvorrichtung 3 bedient werden können.

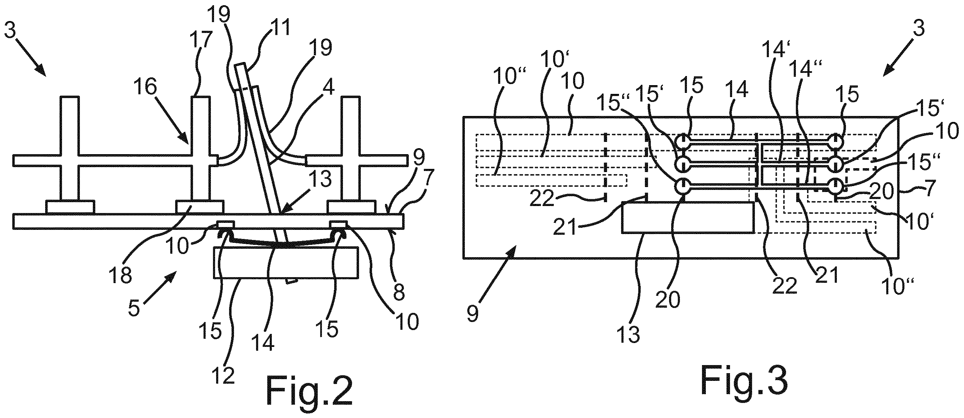

Fig. 2 zeigt eine schematische Seitenansicht einer Ausführungsform einer Bedienvorrichtung 3. Die Bedienvorrichtung 3 weist eine Leiterplatte 7 auf. Die Leiterplatte 7 weist eine erste Seite 8 und eine zweite Seite 9 auf. Auf der ersten Seite 8 ist zumindest ein Schalteinrichtungsteil 10, vorliegend zwei redundante Schalteinrichtungsteile 10 angeordnet. Durch die Redundanz der Schalteinrichtungsteile 10 kann eine Ausfallwahrscheinlichkeit der Bedienvorrichtung 3 reduziert werden. Die Schalteinrichtungsteile 10 sind auf der ersten Seite 8 der Leiterplatte 7, die eine Unterseite ist, angeordnet.

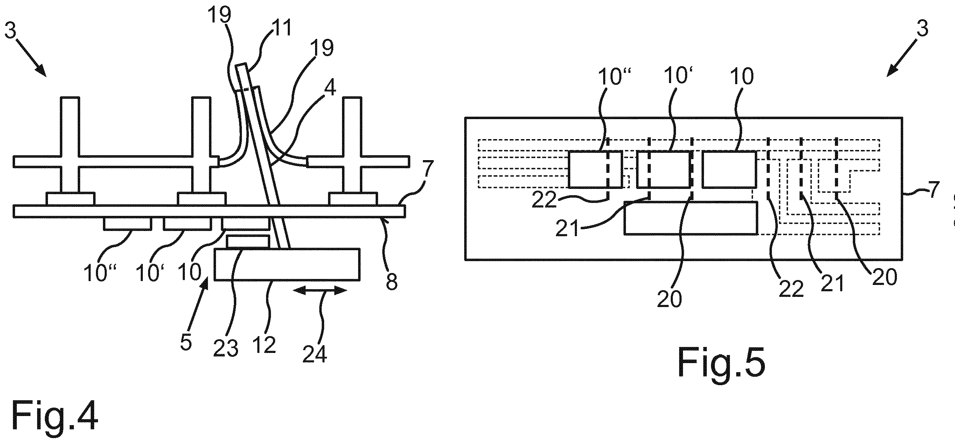

Das Bedienelement 4 weist ein Betätigungsteil 11 auf, welches durch einen Nutzer zum Betätigen des Bedienelements 4 greifbar ist. Die Schalteinrichtungsteile 10 sind bezüglich der Position des Betätigungsteils 11 auf der dem Betätigungsteil 11 abgewandten ersten Seite 8 angeordnet. Die zweite Seite 9 ist dem Betätigungsteil 11 zugewandt. Das Bedienelement 4 ist mit einem Schiebeelement 12, welches zu den Schalteinrichtungsteilen 10 separat ist, gekoppelt. Die Leiterplatte 7 ist zwischen dem Betätigungsteil 11 und dem Schiebeelement 12 angeordnet, so dass das Schiebeelement 12 der ersten Seite 8 zugewandt angeordnet ist. Das Schiebeelement 12 ist direkt mit dem Bedienelement 4 gekoppelt, insbesondere an einem Ende des Bedienelements 4, welches dem Betätigungsteil 11 gegenüberliegend ist. Das Schiebeelement 12 ist abhängig von einer Betätigung des Bedienelements 4 relativ zu den Schalteinrichtungsteilen 10 linear, insbesondere parallel zur Leiterplatte 7, verschiebbar, sodass abhängig von einer derartigen Verschiebung 24 (Fig. 4) und einer Zusammenwirkung der Schalteinrichtungsteile 10 mit dem Schiebeelement 12 die Schalteinrichtung 5 schaltbar ist.

Das Bedienelement 4 erstreckt sich insbesondere beidseits der Leiterplatte 7, insbesondere durch ein Loch 13 in der Leiterplatte 7.

Das Schiebeelement 12 weist hier vorzugsweise zumindest eine Kontaktfeder 14 auf, welche abhängig von der Verschiebung 24 zum direkten Berühren der Schalteinrichtungsteile 10 angeordnet ist. Insbesondere weist die Kontaktfeder 14 vorliegend zwei Kontaktfederelemente 15 auf, welche vorliegend mit dem jeweiligen Schalteinrichtungsteil 10 korrespondieren. Insbesondere befindet sich im vorliegenden Ausführungsbeispiel die Bedienvorrichtung 3 im betätigten Zustand, da das Schiebeelement 12 und damit die Kontaktfeder 14 derart verschoben sind, dass die Kontaktfederelemente 15 und die Schalteinrichtungsteile 10 einen elektrischen Kontakt schließen und damit miteinander zusammenwirken. Insbesondere ist im vorliegenden Ausführungsbeispiel somit das Gerät 6 geschaltet.

Insbesondere weist die Bedienvorrichtung 3 eine optische Anzeigeeinheit 16 auf, die abhängig von dem Schalten der Schalteinrichtung 5 aktivierbar ist und welche auf der dem Betätigungsteil 11 zugewandten Seite der Leiterplatte 7, mit anderen Worten auf der zweiten Seite 9, angeordnet ist. Die optische Anzeigeeinheit 16 kann zumindest einen Lichtleiter 17 aufweisen, wobei auf der optischen Anzeigeeinheit 16 ein das Gerät 6 charakterisierende optische Symbol ausgebildet sein kann und das optische Symbol mittels eines Leuchtmittels 18, welches insbesondere auf der dem Betätigungsteil 11 zugewandten Seite der Leiterplatte 7 angeordnet ist, beleuchtbar ist. Insbesondere durch die Anordnung des Schiebeelements 12 auf der ersten Seite 8 kann das Leuchtmittel 18, welches insbesondere als LED ausgebildet sein kann, auf der zweiten Seite 9 ausgebildet sein.

Insbesondere erstreckt sich das Bedienelement 4 auf einer dem Betätigungsteil 11 zugewandten zweiten Seite 9 der Leiterplatte 7 durch ein Loch in einer zur Leiterplatte 7 beabstandet angeordneten, zumindest bereichsweise lichtdurchlässigen Matte 9 der Bedienvorrichtung 3 erstreckt, so dass es für eine Bedienung durch einen Insassen zugänglich ist. Die Matte 19 ist insbesondere lichtdurchlässig ausgebildet und kann beispielsweise aus Silikon ausgebildet sein. Insbesondere kann somit die Bedienvorrichtung 3 vor Umwelteinflüssen, wie beispielsweise Staub und/oder Wasser, geschützt werden, da insbesondere durch die Matte 19 eine hohe Schutzklasse, beispielsweise IP 69, der Bedienvorrichtung 3 erreicht werden kann.

In der vorliegenden Ausführungsform ist insbesondere die Bedienvorrichtung 3 als ein Kippschalter oder ein Wippschalter ausgebildet.

Fig. 3 zeigt eine schematische Draufsicht auf eine Ausführungsform einer Leiterplatte der Bedienvorrichtung 3 gemäß der Ausführungsform aus Fig. 2. Die Fig. 3 zeigt in einer Draufsicht die Leiterplatte 7. In der Fig. 3 sind drei Kontaktfedern 14, 14', 14" aufgeführt, wobei die Kontaktfeder 14 mit dem Schalteinrichtungsteil 10, die Kontaktfeder 14' mit dem Schalteinrichtungsteil 10' und die Kontaktfeder 14" mit dem Schaltungsteil 10" korrespondiert. Die Kontaktfeder 14, 14', 14" sind vorliegend redundant ausgebildet. Die Schalteinrichtungsteile 10, 10', 10" sind ebenfalls redundant ausgebildet. Die jeweiligen Kontaktfedern 14, 14', 14" weisen paarweise jeweilige Kontaktfederelemente 15, 15', 15" auf. Durch eine lineare Verschiebung 24 des Schiebeelements 12 und damit der Kontaktfedern 14, 14', 14" können unterschiedliche Schaltstellungen 20, 21, 22 eingenommen werden. Die lineare Verschiebung 24 erfolgt insbesondere parallel zur Leiterplatte 7. Im vorliegenden Beispiel ist eine erste Schaltstellung 20 eingenommen, in welcher beispielsweise keine Bedienung des Geräts 6 stattfindet. Die Kontaktfeder 14 berührt mit den Kontaktfederelementen 15 die Schalteinrichtungsteile 10 und schließt so den Stromkreis. Durch eine lineare Verschiebung 24 können dann die Kontaktfederelemente 14, 14', 14", insbesondere deren Kontaktfederelemente 15, 15', 15" in eine zweite Schaltstellung 21 verschoben werden. In der Schaltstellung 21 berühren sich insbesondere die Kontaktfeder 14' mit den Kontaktfederelementen 15' und die Schalteinrichtungsteile 10' und schließen den Stromkreis. Insbesondere kann dadurch das elektrische Gerät 6 geschaltet werden. Durch eine weitere Verschiebung 24 der Kontaktfeder 14, 14', 14", in eine dritte Schaltstellung 22 kann ein weiterer Schaltvorgang initiiert werden, sodass ein weiteres Gerät 6 beziehungsweise eine weitere Funktion des Geräts 6 geschaltet werden kann. In der Schaltstellung 22 berühren sich insbesondere die Kontaktfeder 14" mit den Kontaktfederelementen 15" und die Schalteinrichtungsteile 10" und schließen den Stromkreis. Insbesondere kann mittels dieser Ausgestaltungsform sowohl ein redundantes System aufgrund der Kontaktfederelemente 15, 15', 15" realisiert werden, genauso wie eine hochfunktionelle Ausgestaltungsform der Bedienvorrichtung 3 realisiert werden kann, da mittels einer Bedienvorrichtung 3 eine Mehrzahl von Geräten 6 beziehungsweise eine Mehrzahl von Funktionen des Geräts 6 durch die unterschiedlichen Schaltstellungen 20, 21, 22 realisiert werden kann.

Fig. 3 zeigt ferner, dass das Loch 13 insbesondere als Langloch ausgebildet sein kann. Insbesondere kann vorgesehen sein, dass das Loch 13 mit einer elastischen Abdeckung abgedeckt ist, wobei sich das Bedienelement 4 dann passgenau durch ein weiteres Loch in der elastischen Abdeckung erstreckt, sodass die erste Seite 8, welche in der Fig. 3 nicht sichtbar ist, Staub- und wasserdicht ausgebildet ist.

Fig. 4 zeigt eine weitere Seitenansicht eines Ausführungsbeispiels einer Bedienvorrichtung 3. Die Schalteinrichtung 5 weist vorliegend drei separate Schalteinrichtungsteile 10, 10', 10" auf, welche benachbart auf der ersten Seite 8 der Leiterplatte 7 angeordnet sind.

Auf dem Schiebeelement 12 ist insbesondere ein Magnetelement 23 angeordnet, welches mit den Schalteinrichtungsteilen 10, 10', 10" zusammenwirken kann. Insbesondere kann mittels des Schiebeelements 12 und dem Magnetelement 23 eine berührungslose Zusammenwirkung mit den Schalteinrichtungsteilen 10, 10', 10" realisiert werden. Insbesondere können vorliegend die Schalteinrichtungsteile 10, 10', 10" als Magnet-Sensorelemente, insbesondere als Hall-Sensorelemente, ausgebildet sein. Es ist weiterhin möglich, dass statt einer magnetischen Zusammenwirkung innerhalb der Schalteinrichtung 5 auch eine berührungslose induktive oder kapazitive oder weitere galvanische Zusammenwirkung durchgeführt werden kann.

Vorliegend befindet sich die Bedienvorrichtung 3 beispielsweise in einer unbetätigten Stellung und wechselwirkt mit dem Schalteinrichtungsteil 10. Durch das Verschieben des Schiebeelement 12 bei Betätigung des Bedienelements 4 kann dann das Magnetelement 23 mit dem Schiebeelement 12, insbesondere parallel zur Leiterplatte 7, verschoben werden, sodass die Zusammenwirkung von dem Magnetelement 23 und dem Schalteinrichtungsteil 10' detektiert werden kann. Insbesondere kann damit das Gerät 6 geschaltet werden. Durch eine weitere Verschiebung 24 kann dann eine Zusammenwirkung zwischen dem Magnetelement 23 und dem Schalteinrichtungsteil 10" realisiert werden. Insbesondere kann dadurch ein weiteres Gerät 6 beziehungsweise eine weitere Funktion des Geräts 6 bedient werden.

Fig. 5 zeigt eine schematische Draufsicht auf eine Ausführungsform der Leiterplatte 7 gemäß einer Bedienvorrichtung 3 aus der Fig. 4. Insbesondere zeigt die Fig. 5 die Schalteinrichtungsteile 10, 10', 10", aus der Fig. 4. Insbesondere kann in der ersten Schaltstellung 20 das Gerät 6 beispielsweise nicht bedient werden, während in den Schaltstellungen 21 und 22 eine jeweilige unterschiedliche separate Schaltung für das Gerät 6 durchgeführt werden kann.

Die erfindungsgemäße Bedienvorrichtung wird insbesondere mit dem Bedienelement 4 und mit der Leiterplatte 7 mit einer ersten Seite 8, auf welcher zumindest ein Schalteinrichtungsteil 10, 10' 10" der Schalteinrichtung 5 der Bedienvorrichtung 3 bereitgestellt. Bei dem Betätigen des Bedienelements 4 wird die Schalteinrichtung 5 geschaltet. Das Schalteinrichtungsteil 10, 10', 10" wird auf einer dem Betätigungsteil 11 des Bedienelements 4 abgewandten Seite der Leiterplatte 7 angeordnet. Die Schalteinrichtung 5 weist das Schiebeelement 12 auf, welches auf der dem Betätigungsteil 11 abgewandten Seite der Leiterplatte 7 mit dem Bedienelement 4 gekoppelt wird. Das Schiebeelement 12 wird abhängig von der Betätigung des Bedienelements 4 relativ zum Schalteinrichtungsteil 10, 10', 10" linear verschoben, sodass abhängig von einer derartigen Verschiebung 24 und einer Zusammenwirkung von Schalteinrichtungsteil 10, 10', 10" und dem Schiebeelement 12 die Schalteinrichtung 5 geschaltet wird.

## Patentansprüche

1. Bedienvorrichtung (3) zum Bedienen zumindest eines Geräts (6) in einem Kraftfahrzeug (1), mit einem Bedienelement (4) und mit einer Leiterplatte (7) mit einer ersten Seite (8), auf welcher zumindest ein Schalteinrichtungsteil (10, 10', 10") einer Schalteinrichtung (5) der Bedienvorrichtung (3) angeordnet ist, wobei bei einem Betätigen des Bedienelements (4) die Schalteinrichtung (5) schaltbar ist, wobei das Schalteinrichtungsteil (10, 10', 10") auf einer einem Betätigungsteil (11) des Bedienelements (4) abgewandten ersten Seite (8) der Leiterplatte (7) angeordnet ist und die Schalteinrichtung (5) ein Schiebeelement (12) aufweist, welches auf der dem Betätigungsteil (11) abgewandten ersten Seite (8) der Leiterplatte (7) mit dem Bedienelement (4) gekoppelt ist, wobei das Schiebeelement (12) abhängig von der Betätigung des Bedienelements (4) relativ zum Schalteinrichtungsteil (10, 10', 10") linear verschiebbar ist, so dass abhängig von einer derartigen Verschiebung (24) und einer Zusammenwirkung von Schalteinrichtungsteil (10, 10', 10") und Schiebeelement (12) die Schalteinrichtung (5) schaltbar ist, wobei sich das Bedienelement (4) beidseits der Leiterplatte (7), insbesondere durch ein Loch (13) in der Leiterplatte (7), erstreckt und insbesondere das Loch (13) als ein Langloch ausgebildet ist,
**dadurch gekennzeichnet, dass**
das Loch (13) mit einer elastischen Abdeckung abgedeckt ist, wobei sich das Bedienelement (4) passgenau durch ein weiteres Loch in der elastischen Abdeckung erstreckt.

2. Bedienvorrichtung (3) nach Anspruch 1,
**dadurch gekennzeichnet, dass**
die Schalteinrichtung (5) zumindest zwei separate Schalteinrichtungsteile (10, 10', 10") aufweist, welche benachbart auf der ersten Seite (8) der Leiterplatte (7) angeordnet sind.

3. Bedienvorrichtung (3) nach einem der vorhergehenden Ansprüche,
**dadurch gekennzeichnet, dass**
das Schiebeelement (12) zumindest eine Kontaktfeder (14, 14', 14") aufweist, welche abhängig von der Verschiebung (24) zum direkten Berühren des Schalteinrichtungsteils (10, 10', 10") angeordnet ist.

4. Bedienvorrichtung (3) nach einem der Ansprüche 1 bis 2,
**dadurch gekennzeichnet, dass**
das Schalteinrichtungsteil (10, 10', 10") und das Schiebeelement (12) berührungslos miteinander zusammenwirken.

5. Bedienvorrichtung (3) nach Anspruch 4,
**dadurch gekennzeichnet, dass**
das Schalteinrichtungsteil (10, 10', 10") als Magnet-Sensorelement ausgebildet ist.

6. Bedienvorrichtung (3) nach einem der vorhergehenden Ansprüche,
**dadurch gekennzeichnet, dass**
die Bedienvorrichtung (3) eine optische Anzeigeeinheit (16) aufweist, die abhängig von dem Schalten der Schalteinrichtung (5) aktivierbar ist und welche auf einer dem Betätigungsteil (11) zugewandten zweiten Seite (9) der Leiterplatte (7) angeordnet ist.

7. Bedienvorrichtung (3) nach Anspruch 6,
**dadurch gekennzeichnet, dass**
die optische Anzeigeeinheit (16) zumindest einen Lichtleiter (17) aufweist.

8. Bedienvorrichtung (3) nach einem der Ansprüche 6 oder 7,
**dadurch gekennzeichnet, dass**
auf der optischen Anzeigeeinheit (16) ein das Gerät (6) charakterisierendes optisches Symbol ausgebildet ist und das optische Symbol mittels eines Leuchtmittels (18), welches insbesondere auf einer dem Betätigungsteil (11) zugewandten zweiten Seite (9) der Leiterplatte (7) angeordnet ist, beleuchtbar ist.

9. Bedienvorrichtung (3) nach einem der vorhergehenden Ansprüche,
**dadurch gekennzeichnet, dass**
sich das Bedienelement (4) auf einer dem Betätigungsteil (11) zugewandten zweiten Seite (9) der Leiterplatte (7) durch ein Loch in einer zur Leiterplatte (7) beabstandet angeordneten, zumindest bereichsweise lichtdurchlässigen Matte (19) der Bedienvorrichtung (3) erstreckt.

10. Bedienvorrichtung (3) nach Anspruch 9,
**dadurch gekennzeichnet, dass**
die Matte (19) als Silikonmatte ausgebildet ist.

11. Bedienvorrichtung (3) nach einem der vorhergehenden Ansprüche,
**dadurch gekennzeichnet, dass**
das Bedienelement (4) ein Kippschalter oder ein Wippschalter ist.

12. Kraftfahrzeug (1) mit einer Bedienvorrichtung (3) nach einem der Ansprüche 1 bis 11.

13. Verfahren zum Bedienen einer Bedienvorrichtung (3) zum Bedienen eines Geräts (6) in einem Kraftfahrzeug (1), mit einem Bedienelement (4) und mit einer Leiterplatte (7) mit einer ersten Seite (8), auf welcher zumindest ein Schalteinrichtungsteil (10, 10', 10") einer Schalteinrichtung (5) der Bedienvorrichtung (3) bereitgestellt wird, wobei bei einem Betätigen des Bedienelements (4) die Schalteinrichtung (5) geschaltet wird,
wobei das Schalteinrichtungsteil (10, 10', 10") auf einer einem Betätigungsteil (11) des Bedienelements (4) abgewandten Seite der Leiterplatte (7) angeordnet wird und die Schalteinrichtung (5) ein Schiebeelement (12) aufweist, welches auf der dem Betätigungsteil (11) abgewandten Seite der Leiterplatte (7) mit dem Bedienelement (4) gekoppelt wird, wobei das Schiebeelement (12) abhängig von der Betätigung des Bedienelements (4) relativ zum Schalteinrichtungsteil (10, 10', 10") linear verschoben wird, so dass abhängig von einer derartigen Verschiebung (24) und einer Zusammenwirkung von Schalteinrichtungsteil (10, 10', 10") und dem Schiebeelement (12) die Schalteinrichtung (5) geschaltet wird, wobei das Bedienelement (4) beidseits der Leiterplatte (7), insbesondere durch ein Loch (13) in der Leiterplatte (7), vorgesehen wird und insbesondere das Loch (13) als ein Langloch bereitgestellt wird,
**dadurch gekennzeichnet, dass**
das Loch (13) mit einer elastischen Abdeckung abgedeckt wird, wobei das Bedienelement (4) passgenau durch ein weiteres Loch in der elastischen Abdeckung bereitgestellt wird.

## Claims

1. Operating device (3) for operating at least one unit (6) in a motor vehicle (1), having an operating element (4) and having a circuit board (7) with a first side (8) on which at least one switching apparatus part (10, 10', 10'') of a switching apparatus (5) of the operating device (3) is arranged, wherein the switching apparatus (5) is able to be switched when the operating element (4) is actuated, wherein the switching apparatus part (10, 10', 10") is arranged on a first side (8), facing away from an actuation part (11) of the operating element (4), of the circuit board (7) and the switching apparatus (5) has a sliding element (12) that is coupled to the operating element (4) on the first side (8), facing away from the actuation part (11), of the circuit board (7), wherein the sliding element (12) is able to be moved linearly in relation to the switching apparatus part (10, 10', 10"), depending on the actuation of the operating element (4), such that the switching apparatus (5) is able to be switched depending on such a movement (24) and an interaction between the switching apparatus part (10, 10', 10") and the sliding element (12), wherein the operating element (4) extends on both sides of the circuit board (7), in particular through a hole (13) in the circuit board (7), and the hole (13) is in particular formed as an elongate hole,
**characterized in that**
the hole (13) is covered by an elastic cover, wherein the operating element (4) extends with a precision fit through a further hole in the elastic cover.

2. Operating device (3) according to Claim 1,
**characterized in that**
the switching apparatus (5) has at least two separate switching apparatus parts (10, 10', 10") that are arranged adjacently on the first side (8) of the circuit board (7).

3. Operating device (3) according to either of the preceding claims,
**characterized in that**
the sliding element (12) has at least one contact spring (14, 14', 14") that is arranged so as to make direct contact with the switching apparatus part (10, 10', 10") depending on the movement (24).

4. Operating device (3) according to either of Claims 1 and 2,
**characterized in that**
the switching apparatus part (10, 10', 10") and the sliding element (12) interact contactlessly with one another.

5. Operating device (3) according to Claim 4,
**characterized in that**
the switching apparatus part (10, 10', 10") is formed as a magnetic sensor element.

6. Operating device (3) according to one of the preceding claims,
**characterized in that**
the operating device (3) has an optical display unit (16) that is able to be activated depending on the switching of the switching apparatus (5) and that is arranged on a second side (9), facing the actuation part (11), of the circuit board (7).

7. Operating device (3) according to Claim 6,
**characterized in that**
the optical display unit (16) has at least one light guide (17).

8. Operating device (3) according to either of Claims 6 and 7,
**characterized in that**
an optical symbol characterizing the unit (6) is formed on the optical display unit (16) and the optical symbol is able to be illuminated by way of a lighting means (18) that is arranged in particular on a second side (9), facing the actuation part (11), of the circuit board (7).

9. Operating device (3) according to one of the preceding claims,
**characterized in that**
the operating element (4) extends on a second side (9), facing the actuation part (11), of the circuit board (7), through a hole in a mat (19) of the operating device (3), which mat is arranged at a distance from the circuit board (7) and is at least regionally transparent.

10. Operating device (3) according to Claim 9,
**characterized in that**
the mat (19) is formed as a silicone mat.

11. Operating device (3) according to one of the preceding claims,
**characterized in that**
the operating element (4) is a toggle switch or a rocker switch.

12. Motor vehicle (1) having an operating device (3) according to one of Claims 1 to 11.

13. Method for operating an operating device (3) for operating a unit (6) in a motor vehicle (1), having an operating element (4) and having a circuit board (7) with a first side (8) on which at least one switching apparatus part (10, 10', 10") of a switching apparatus (5) of the operating device (3) is provided, wherein the switching apparatus (5) is switched when the operating element (4) is actuated, wherein the switching apparatus part (10, 10', 10") is arranged on a side, facing away from an actuation part (11) of the operating element (4), of the circuit board (7) and the switching apparatus (5) has a sliding element (12) that is coupled to the operating element (4) on the side, facing away from the actuation part (11), of the circuit board (7), wherein the sliding element (12) is moved linearly in relation to the switching apparatus part (10, 10', 10"), depending on the actuation of the operating element (4), such that the switching apparatus (5) is switched depending on such a movement (24) and an interaction between the switching apparatus part (10, 10', 10") and the sliding element (12), wherein the operating element (4) is provided on both sides of the circuit board (7), in particular through a hole (13) in the circuit board (7), and the hole (13) is in particular provided as an elongate hole, **characterized in that**
the hole (13) is covered by an elastic cover, wherein the operating element (4) is provided with a precision fit through a further hole in the elastic cover.

## Revendications

1. Dispositif de commande (3) permettant de commander au moins un appareil (6) dans un véhicule automobile (1), comprenant un élément de commande (4) et une carte de circuits imprimés (7) dotée d'un premier côté (8) sur lequel est disposée au moins une partie (10, 10', 10") d'un dispositif de commutation (5) du dispositif de commande (3), dans lequel le dispositif de commutation (5) peut être commuté lors d'un actionnement de l'élément de commande (4), dans lequel la partie de dispositif de commutation (10, 10', 10") est disposée sur un premier côté (8) de la carte de circuits imprimés (7) opposé à une partie d'actionnement (11) de l'élément de commande (4) et le dispositif de commutation (5) comprend un élément coulissant (12), lequel est accouplé à l'élément de commande (4) sur le premier côté (8) de la carte de circuits imprimés (7) opposé à la partie d'actionnement (11), dans lequel l'élément coulissant (12) est déplaçable linéairement par rapport à la partie de dispositif de commutation (10, 10', 10") en fonction de l'actionnement de l'élément de commande (4), de sorte que le dispositif de commutation (5) peut être commuté en fonction d'un tel déplacement (24) et d'une coopération de la partie de dispositif de commutation (10, 10', 10") et de l'élément coulissant (12), dans lequel l'élément de commande (4) s'étend des deux côtés de la carte de circuits imprimés (7), en particulier à travers un trou (13) dans la carte de circuits imprimés (7), et le trou (13) est en particulier réalisé sous forme de trou oblong, **caractérisé en ce que**
le trou (13) est recouvert par un recouvrement élastique, l'élément de commande (4) s'étendant de manière précise à travers un autre trou dans le recouvrement élastique.

2. Dispositif de commande (3) selon la revendication 1, **caractérisé en ce que**
le dispositif de commutation (5) comprend au moins deux parties de dispositif de commutation séparées (10, 10', 10"), lesquelles sont disposées de manière adjacente sur le premier côté (8) de la carte de circuits imprimés (7).

3. Dispositif de commande (3) selon l'une des revendications précédentes,
**caractérisé en ce que**
l'élément coulissant (12) comprend au moins un ressort de contact (14, 14', 14"), lequel est disposé pour le contact direct avec la partie de dispositif de commutation (10, 10', 10") en fonction du déplacement (24) .

4. Dispositif de commande (3) selon l'une des revendications 1 et 2,
**caractérisé en ce que**
la partie de dispositif de commutation (10, 10', 10") et l'élément coulissant (12) coopèrent l'un avec l'autre sans contact.

5. Dispositif de commande (3) selon la revendication 4, **caractérisé en ce que**
la partie de dispositif de commutation (10, 10', 10") est réalisée sous forme d'élément de capteur magnétique.

6. Dispositif de commande (3) selon l'une des revendications précédentes,
**caractérisé en ce que**
le dispositif de commande (3) comprend une unité d'affichage optique (16) qui peut être activée en fonction de la commutation du dispositif de commutation (5) et qui est disposée sur un deuxième côté (9), tourné vers la partie d'actionnement (11), de la carte de circuits imprimés (7).

7. Dispositif de commande (3) selon la revendication 6, **caractérisé en ce que**
l'unité d'affichage optique (16) comprend au moins un guide d'ondes optiques (17).

8. Dispositif de commande (3) selon l'une des revendications 6 ou 7,
**caractérisé en ce**
**qu'**un symbole optique caractérisant l'appareil (6) est réalisé sur l'unité d'affichage optique (16) et le symbole optique peut être éclairé au moyen d'un moyen d'éclairage (18), lequel est disposé en particulier sur un deuxième côté (9) de la carte de circuits imprimés (7) tourné vers la partie d'actionnement (11).

9. Dispositif de commande (3) selon l'une des revendications précédentes,
**caractérisé en ce que**
l'élément de commande (4) s'étend, sur un deuxième côté (9) de la carte de circuits imprimés (7) tourné vers la partie d'actionnement (11), à travers un trou dans un mat (19) du dispositif de commande (3) transparent au moins dans certaines régions et disposé à distance de la carte de circuits imprimés (7).

10. Dispositif de commande (3) selon la revendication 9, **caractérisé en ce que**
le mat (19) est réalisé sous forme de mat de silicone.

11. Dispositif de commande (3) selon l'une des revendications précédentes,
**caractérisé en ce que**
l'élément de commande (4) est un commutateur à levier ou un commutateur à bascule.

12. Véhicule automobile (1) comprenant un dispositif de commande (3) selon l'une des revendications 1 à 11.

13. Procédé permettant de commander un dispositif de commande (3) pour la commande d'un appareil (6) dans un véhicule automobile (1), comprenant un élément de commande (4) et une carte de circuits imprimés (7) dotée d'un premier côté (8) sur lequel est fournie au moins une partie (10, 10', 10") d'un dispositif de commutation (5) du dispositif de commande (3), dans lequel le dispositif de commutation (5) est commuté lors d'un actionnement de l'élément de commande (4), dans lequel la partie de dispositif de commutation (10, 10', 10") est disposée sur un côté de la carte de circuits imprimés (7) opposé à une partie d'actionnement (11) de l'élément de commande (4) et le dispositif de commutation (5) comprend un élément coulissant (12), lequel est accouplé à l'élément de commande (4) sur le côté de la carte de circuits imprimés (7) opposé à la partie d'actionnement (11), dans lequel l'élément coulissant (12) est déplacé linéairement par rapport à la partie de dispositif de commutation (10, 10', 10") en fonction de l'actionnement de l'élément de commande (4), de sorte que le dispositif de commutation (5) est commuté en fonction d'un tel déplacement (24) et d'une coopération de la partie de dispositif de commutation (10, 10', 10") et de l'élément coulissant (12), dans lequel l'élément de commande (4) s'étend des deux côtés de la carte de circuits imprimés (7), en particulier à travers un trou (13) dans la carte de circuits imprimés (7), et le trou (13) est en particulier produit sous forme de trou oblong,
**caractérisé en ce que**
le trou (13) est recouvert par un recouvrement élastique, l'élément de commande (4) s'étendant de manière précise à travers un autre trou dans le recouvrement élastique.
